(19) Europäisches Patentamt
European Patent Office
Office européen des brevets

(11) EP 0 639 866 B1

(12) **EUROPEAN PATENT SPECIFICATION**

(45) Date of publication and mention
of the grant of the patent:
**21.05.1997 Bulletin 1997/21**

(51) Int Cl.6: **H01M 8/12**, H01M 4/90,
C04B 35/01

(21) Application number: **94305941.0**

(22) Date of filing: **11.08.1994**

(54) **Stable air electrode for high temperature solid oxide electrolyte electrochemical cells**

Stabile Luftelektrode für hochtemperatur elektrochemische Zellen mit Festoxidelektrolyt

Electrode à air stable pour cellules à électrolyte solide d'oxydes et fonctionant à haute températures

(84) Designated Contracting States:
**BE DE FR GB IT NL SE**

(30) Priority: **16.08.1993 US 106853**

(43) Date of publication of application:
**22.02.1995 Bulletin 1995/08**

(73) Proprietor: **WESTINGHOUSE ELECTRIC
CORPORATION**
**Pittsburgh Pennsylvania 15222 (US)**

(72) Inventors:
• **Ruka, Roswell J.**
**Pittsburgh, PA 15235 (US)**
• **Kuo, Lewis J. H.**
**Monroeville, PA 15146 (US)**

• **Vasilow, Theodore R.**
**Irwin, PA 15642 (US)**

(74) Representative: **van Berlyn, Ronald Gilbert**
**23, Centre Heights**
**London NW3 6JG (GB)**

(56) References cited:
**EP-A- 0 188 868        DE-A- 4 406 276**

• **PATENT ABSTRACTS OF JAPAN vol. 13, no. 496
(E-843) (3844) 9 November 1989 & JP-A-01 200
560 (MITSUBISHI HEAVY IND LTD) 11 August
1989**
• **PATENT ABSTRACTS OF JAPAN vol. 14, no. 550
(E-1009) 6 December 1990 & JP-A-02 236 959
(MITSUBISHI HEAVY IND LTD) 19 September
1990**

## Description

The invention relates generally to electrochemical devices, and particularly electrochemical cells, for conversion between chemical and electrical forms of energy, and more particularly to fuel cells having a solid oxide electrolyte through which oxygen ions are conducted. Even more particularly, the invention relates to an air electrode composition having improved resistance to dimensional shrinkage during thermal cycling.

Fuel cells and fuel cell generators in general are electrochemical cells to which a gaseous fuel and an oxidant are supplied continually and permitted to react in a manner that results in the production of useful direct-current electrical energy. For practical levels of power generation, low cost materials are used such as air for the oxidant and carbonaceous gases or coal for the fuel, although the fuel cell is not limited to these reactants. Conventional fuels are, for example, fossil fuels, naturally occurring gaseous hydrocarbons and fuels easily derived therefrom, such as hydrogen and carbon monoxide.

High temperature, solid oxide electrolyte, electrochemical cell configurations, such as fuel cells and fuel cell generators, are well-known in the art, and can include, for example, a plurality of elongated annular cells having a solid electrolyte sandwiched between thin film electrodes. Typically, the plurality of cells are connected in series to provide a desired system voltage and in parallel to provide a desired system current. These fuel cells are made of successive layers of bonded ceramic materials which perform the function of support, air electrode, electrolyte, fuel electrode, interconnection, and other functions.

The air electrode or cathode of the fuel cell can be an annular, porous member and may, for example, be comprised of doped and undoped oxides or mixtures of oxides in the perovskite family, such as $LaMnO_3$, $CaMnO_3$, $LaNiO_3$, $LaCoO_3$, $LaCrO_3$, $In_2O_3$, and the like. Generally surrounding the outer periphery of the air electrode is a gas-tight solid electrolyte which is typically comprised of yttria stabilized zirconia, a highly oxygen-ion conductive material. Substantially surrounding the solid electrolyte is an outer, porous, fuel electrode or anode which is typically comprised of nickel-zirconia or cobalt-zirconia cermet. Both the solid electrolyte and the outer electrode are discontinuous to allow inclusion of an electrical interconnection material for series connection between cells.

Many improvements to the air electrode for the fuel cell have been made. U.S. Specification Patent No. 4,562,124 (Ruka) discovered thermal expansion problems between the air electrode, comprising $LaMnO_3$ and $LaCrO_3$ doped with Sr or Ca for high electrical conductivity, and other materials used in the fuel cell, such as the stabilized zirconia electrolyte or the stabilized zirconia support tube. This air electrode material typically has a higher coefficient of thermal expansion than the other materials which upon thermal cycling between the high temperatures of fabrication or operation and room temperature experience cracking and render the fuel cell ineffective or at least less effective. Ruka discovered that replacing a small amount of La in the $LaMnO_3$ or $LaCrO_3$ with Ce in the air electrode, reduced the coefficient of thermal expansion to more precisely match the coefficient of thermal expansion of the other materials used in the electrolyte and the support tube. The air electrode compositions include a solid solution having a perovskite-like crystal structure $ABO_3$ material and having the general chemical formula:

$$La_{1-x-w} (M_L)_x (Ce)_w (M_{s1})_{1-y} (M_{s2})_y O_3,$$

where La, $M_L$ and Ce are the larger A ions and $M_{s1}$ and $M_{s2}$ are the smaller B ions; where $M_L$ = Ca, Sr, Ba, or mixtures thereof; $M_{s1}$ = Mn, Cr, or mixtures thereof; $M_{s2}$ = Ni, Fe, Co, Ti, Al, In, Sn, Mg, Y, Nb, Ta, or mixtures thereof; and, where w is about 0.05 to 0.25, preferably 0.1 to 0.2; x + w is about 0.1 to 0.7, preferably 0.4 to 0.7; and, y is about 0 to 0.5, preferably 0. The preferred air electrode compositions of Ruka are $La_{0.3} Ca_{0.5-0.6} Ce_{0.2-0.1} MnO_3$, and $La_{0.3} Ca_{0.5-0.6} Ce_{0.2-0.1} CrO_3$.

U.S. Patent Specification No. 4,645,622 (Kock) discloses a low resistive vapor phase electrolysis electrode or high temperature electrode having the general chemical formula:

$$La_x Ca_y MnO_3,$$

where x = 0.44 to 0.48 and y = 0.42 to 0.50.

U.S. Patent Specification No. 4,197,362 (Schmidberger et al.) discloses a high conductivity stable, gas impervious interconnection material, also useful for electrodes in oxygen probes and waste gas sensors, having the general chemical formulas: $La_{0.5} Ca_{0.5} MnO_3$; $La_{0.8} Ba_{0.2} MnO_3$; $La_{0.8} Ba_{0.2} Cr_{0.2} Mn_{0.8} O_3$; and, $La_{0.5} Sr_{0.5} MnO_3$. U.S. Patent Specification No. 4,174,260 (Schmidberger) discloses an electrochemical cell configuration having outer porous electrodes having the chemical formula:

$$La_{0.5} Ca_{0.5} MnO_3.$$

U.S. Patent Specification No. 5,108,850 (Carlson et al.) discloses a self-supporting gas permeable, sintered, thin-walled, high temperature, electrically conductive calcium-doped lanthanum magnite air electrode for electrochemical cells having an improved thermal expansion match with the solid oxide electrolyte, preferably having the general chemical formula:

$$La_{1-x} Ca_x MnO_3,$$

where x = 0.1 to 0.25. In addition, the porous air electrode tube of Carlson et al. has a theoretical density of from 60% to 85%, that is, from 15% to 40% porosity by volume. The air electrode tube further has a coefficient of thermal expansion of from $10.4 \times 10^{-6}/°C$ to $10.8 \times 10^{-6}/°C$, all in the temperature ranges of from 25°C to 1,000°C, and the difference in the coefficient of thermal expansion between the air electrode material and the yttria-stabilized zirconia solid electrolyte is no more than $0.3 \times 10^{-6}/°C$. The electrical resistivity at 1,000°C is from about $0.006\ \Omega$-cm to $0.015\ \Omega$-cm. Carlson et al. disclose a preferred air electrode composition having the chemical formula:

$$La_{0.8}\ Ca_{0.2}\ MnO_3.$$

However, during thermal cycling, tubular, solid oxide electrolyte electrochemical cells, such as fuel cells, containing air electrodes of porous calcium-doped lanthanum magnite, have cracked on occasion on lowering temperatures to between 800°C and 25°C and from operating temperatures of between 900°C to 1200°C. A deficiency of porous $La_{0.8}\ Ca_{0.2}\ MnO_3$ such as disclosed in Carlson et al., for example, is that the material exhibits excessive shrinkage during temperature cycling which leads to cell cracking and renders the fuel cell ineffective or at least less effective. What is needed is an air electrode which does not exhibit dimensional shrinkage after isothermal or thermal cycling conditions. One of the main objects of this invention is to provide such an electrode, electrode composition and cell using such an electrode.

It would be desirable to provide a more thermally and dimensionally stable air electrode for a solid electrolyte electrochemical cell. It would also be desirable to provide an air electrode having a reduced concentration of lanthanum to reduce the tendency for lanthanum zirconate formation at elevated temperatures at the air electrode-electrolyte interface. It would further be desirable to provide an air electrode with a coefficient of thermal expansion to better match the coefficient of thermal expansion of the solid oxide electrolyte.

It is an advantage of the invention to provide an air electrode that does not exhibit substantial dimensional shrinkage after isothermal or thermal cycling conditions. It is another advantage of the invention to replace some of the lanthanum using cerium to reduce the formation of lanthanum zirconate.

Accordingly, the present invention resides, in one embodiment, in a composition, characterized by having the general chemical formula:

$$La_{1-x-w}\ (M_L)_x\ (Ce)_{w+z}\ (M_{s1})_{1-y}\ (M_{s2})_y\ O_3$$

where $M_L$ is Ca, $M_{s1}$ is Mn, $M_{s2}$ is selected from the group consisting of Ni, Cr and mixtures thereof, x is about 0.2, w is 0.1 to 0.2, y is 0.03 to 0.2 and z is 0.0 to 0.005. The invention further resides in an electrode characterized by having the general chemical formula:

$$La_{1-x-w}\ (M_L)_x\ (Ce)_{w+z}\ (M_{s1})_{1-y}\ (M_{s2})_y\ O_3$$

where $M_L$ is Ca, $M_{s1}$ is Mn, $M_{s2}$ is selected from the group consisting of Ni, Cr and mixtures thereof, x is about 0.2, w is 0.1 to 0.2, y is 0.03 to 0.2 and z is 0.0 to 0.005. The invention also resides in an annular high temperature, solid oxide electrolyte electrochemical cell, characterized by having: a porous, annular, inner air electrode; a dense, solid electrolyte substantially surrounding the outer periphery of the air electrode; and a porous, outer fuel electrode substantially surrounding the solid electrolyte, where the solid electrolyte and outer fuel electrode have a discontinuity containing an electrically conductive interconnection material disposed on the inner air electrode in the discontinuity of the electrolyte, wherein the air electrode has the general chemical formula:

$$La_{1-x-w}\ (M_L)_x\ (Ce)_{w+z}\ (M_{s1})_{1-y}\ (M_{s2})_y\ O_3,$$

where $M_L = Ca$, $M_{s1} = Mn$, $M_{s2} = Ni$, Cr or a mixture thereof, x is about 0.2, w is 0.1-0.2, y is 0.03-0.2, and z is 0.0-0.005.

The use of these specific ranges of component elements provides an air electrode with less shrinkage during thermal cycling. The use of these ranges of component elements further provides an air electrode with a reduced tendency for lanthanum zirconate formation at the air electrode-electrolyte interface at elevated temperatures and in some cases a better thermal expansion match with the electrolyte.

The invention will become more readily apparent from the following description thereof, shown by way of example only, in the accompanying drawings in which:

FIGURE 1, which best shows the invention, is a schematic, sectional view of a preferred embodiment of a single, annular, high temperature solid oxide electrolyte electrochemical fuel cell including an air-electrode material in accordance with the invention;
FIGURE 2 is a diagram showing total shrinkage for heat cycled material $La_{0.7}\ Ca_{0.2}\ Ce_{0.105}\ Mn_{0.94}\ Cr_{0.04}\ Ni_{0.02}\ O_3$, a preferred air electrode material in accordance with the invention; and
FIGURE 3 is a diagram showing total shrinkage for heat cycled prior art material $La_{0.8}\ Ca_{0.2}\ MnO_3$.

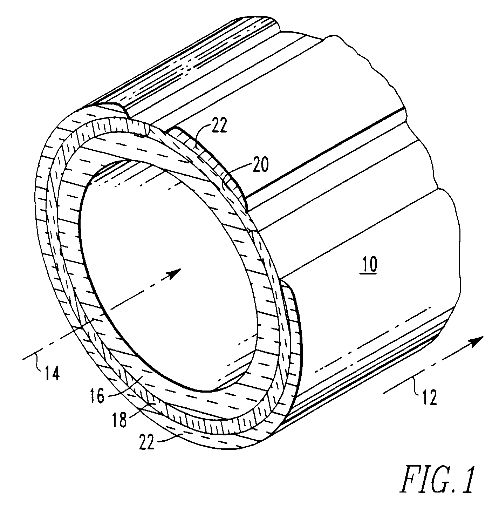

Referring now to Figure 1, a preferred, annular, electrochemical cell 10 is shown. It will be recognized that the electrochemical cell can also have a planar, rectangular, or the like configuration. The preferred configuration is based upon a system wherein a gaseous fuel, such as hydrogen or carbon monoxide, is directed axially over the outside of the cell, as indicated by the arrow 12, and an oxidant, such as air or $O_2$, is fed through a tube (not shown), such as a separate oxidant injector tube or an integrally formed tube within the air electrode (not shown), to the interior of the electrochemical cell 10, as indicated by the arrow 14. It will be recognized that the location of the reactant fuel and oxidant can be interchanged such that the oxidant flows over the outside of the cell and the fuel flows within the cell. This, however, requires the reversal of the cell electrodes, which is referred to as an inverted cell structure.

In the preferred form as shown in Figure 1, the electrochemical cell 10 includes a thin layer of a porous, self-supporting, inner air electrode or cathode 16 which provides structural integrity to the cell. The porous air electrode 16 is typically one millimeter to three millimeters thick, preferably from 1 millimeter to 2 millimeters thick. The air electrode 16 can be extruded or isostatically pressed to shape and then sintered. The air electrode to be useful in the electrochemical cell will be from about 12% porous to 40% porous, preferably from 20% porous to 35% porous.

Optionally, an inner support tube (not shown) may be used, if necessary, to support the air electrode 16 and to provide structural integrity to the cell. The support tube is typically comprised of porous calcia stabilized zirconia and is typically approximately one millimeter thick. However, it is preferred not to use a support tube since it is difficult to match the thermal expansion coefficients of the support tube and the contacting air electrode and to prevent some migration of air electrode material into the support tube during fabrication and at about 1000°C operating temperature of the electrochemical cell.

Generally surrounding the outer periphery of the air electrode 16 is a layer of a gas-tight solid electrolyte 18, which is typically comprised of yttria stabilized zirconia and about one micrometer to one hundred micrometers thick (0.001 mm to 0.1 mm). The solid electrolyte 18 can, for example, be deposited onto the air electrode by well-known, vapor deposition and high temperature, electrochemical vapor deposition techniques. However, a selected radial segment 20 of the air electrode 16 is, for example, masked during fabrication of the solid electrolyte and an interconnection material 20 is deposited on the segment.

The solid electrolyte 18 should be as thin as it can be fabricated consistent with necessary mechanical strength and ability to permit only oxygen ions to pass through it. To prevent diffusion of molecular gases through the electrolyte, it is also necessary that the material be relatively dense or at least have no interconnecting pores. Furthermore, the electrolyte material is selected for its high ratio of ionic conductivity to electronic conductivity, a high ratio of oxygen ion to cation conductivity and its chemical stability at operating temperatures of approximately 1000°C.

The interconnection material 20 is typically about five micrometers to about one hundred micrometers thick (0.005 mm to 0.1 mm). The interconnection material 20 preferably extends the axial length of the elongated electrochemical cell 10 and must be electrically conductive in both an oxidizing and reducing environment at approximately 1000°C., the usual operating temperature of the electrochemical cell. The interconnection material is typically made of non-porous, dense lanthanum chromite doped with calcium, strontium or magnesium.

Substantially surrounding the solid electrolyte 18 except for the interconnect area is a thin, porous fuel electrode 22 or anode. As shown, the fuel electrode 22 is discontinuous, being spaced from the interconnection material a distance sufficient to avoid direct electrical communication between the fuel electrode and both the interconnection material and the air electrode. The fuel electrode 22 is typically made of metal ceramic (cermet) material and is typically about thirty micrometers to one hundred micrometers thick (.03 mm to 0.1 mm). The fuel electrode 22 is typically comprised of nickel-zirconia or cobalt-zirconia cermet and is further a skeletal extension of the yttria stabilized zirconia solid electrolyte material. The fuel electrode 22 is deposited on the solid electrolyte 18 by well-known techniques such as dipping or spraying and may be anchored more securely by electrochemical vapor deposition in a portion of the pore structure.

The electrochemical cell 10 as shown in Figure 1 is generally operated at a high temperature, such as 1000°C, whereby oxygen molecules pass through the porous, electrically conductive air electrode material and are changed to oxygen ions at the air electrode-solid electrolyte interface. The oxygen ions then migrate through the solid electrolyte to combine with the fuel at the fuel electrode releasing electrons while electrons are extracted by oxygen to form oxygen ions at the air electrode, thus generating a flow of electrical current in an external load circuit from anode to cathode. A plurality of cells can be connected by contact between the air electrode interconnect of one cell and the anode of another cell.

In operation, the oxidant which is fed within the electrochemical cell is electrochemically reduced at the air electrode-electrolyte interface according to the reaction:

$$O_2 + 4e^- \rightarrow 2O^{2-},$$

the electrons being supplied by the air electrode and the oxygen ions become a part of the electrolyte crystal structure. The oxygen ions then migrate through the solid electrolyte and at the fuel electrode-electrolyte interface are electrochemically oxidized in the presence of a fuel according to the reaction:

$$2O^{2-} + 2H_2 \rightarrow 2H_2O + 4e^-,$$

where hydrogen is used as a fuel. Thus, an oxidized fuel is produced which is carried away and electrons are released at the fuel electrode.

The electrons then flow through an external load circuit to the air electrode, thus generating a flow of electrical current. The electrochemical reaction of oxygen with a fuel thus produces a potential difference across the external load which maintains a continuous electron and oxygen ion flow in the closed circuit and useful power can be derived.

The porous air electrode remains exposed to the oxidant gas atmosphere, usually air, during generator operation, and oxygen reduction takes place at the air electrode-electrolyte interface. In the annular electrochemical cell configuration, the air electrode maintains intimate contact with the dense electrolyte, dense interconnection material and porous support tube, when used. The selection of suitable air electrodes must be done carefully to ensure good conductivity of electricity at the 1000°C operating temperatures, good low resistance contact to the electrolyte, high temperature chemical stability and structural stability to maintain long term mechanical integrity necessary for successful operation of the electrochemical cell, porosity, and a coefficient of thermal expansion compatible with the solid electrolyte in a composition to minimize the tendency of the air electrode material to migrate into the electrolyte or to interact with the electrolyte, that is, to form lanthanum zirconate at the air electrode-electrolyte interface.

The electrochemical cell according to the invention provides an air electrode material having substantially reduced dimensional shrinkage related to oxygen partial pressure changes at the operating temperature of about 1000°C and during thermal cycling between 1000°C and lower (that is, 600°C or room temperature). In addition, the composition according to the invention substantially reduces the concentration of lanthanum in order to reduce a tendency for lanthanum zirconate formation at the air electrode-electrolyte interface at elevated temperatures which can be detrimental to cell electrical performance. Furthermore, the coefficient of thermal expansion between the air electrode and the electrolyte can be made more compatible in some compositions.

The components of a cell using a prior art $La_{0.8}Ca_{0.2}MnO_3$ air electrode material remain, under operating conditions, stable to shrinkage except the air electrode which has a tendency to shrink when subjected to certain thermal cycling conditions. This tendency to shrink which is resisted by the electrolyte and interconnection translates into stresses between the air electrode and these adjoining components and in some cases can result in cracking failure of individual cells, hampering operation of a multi-cell generator.

Advantageously, the percentage shrinkage is substantially reduced using the air electrode composition of the invention which consequently should provide longer life for the electrochemical cell.

The air electrode composition according to this invention has a general chemical formula:

$$La_{1-x-w} (M_L)_x (Ce)_{w+z} (M_{s1})_{1-y} (M_{s2})_y O_3$$

where $M_L$ = Ca; $M_{s1}$ = Mn; $M_{s2}$ = Ni, Cr or a mixture thereof; x is approximately 0.2; w is about 0.1-0.2; y is about 0.03-0.2; and, z is about 0.0-0.005. A preferred composition that experiences a substantially reduced dimensional shrinkage during thermal cycling is:

$$La_{0.7} Ca_{0.2} Ce_{0.105} Mn_{0.94} Cr_{0.04} Ni_{0.02} O_3.$$

The up to about 0.005 excess of Ce is not required but preferred. Examples of other useful compositions according to the invention are:

$$La_{0.7} Ca_{0.2} Ce_{0.1} Mn_{0.875} Cr_{0.125} O_3;$$

$$La_{0.7} Ca_{0.2} Ce_{0.1} Mn_{0.875} Ni_{0.125} O_3;$$

and,

$$La_{0.7} Ca_{0.2} Ce_{0.1} Mn_{0.875} Cr_{0.0625} Ni_{0.0625} O_3.$$

EXAMPLE

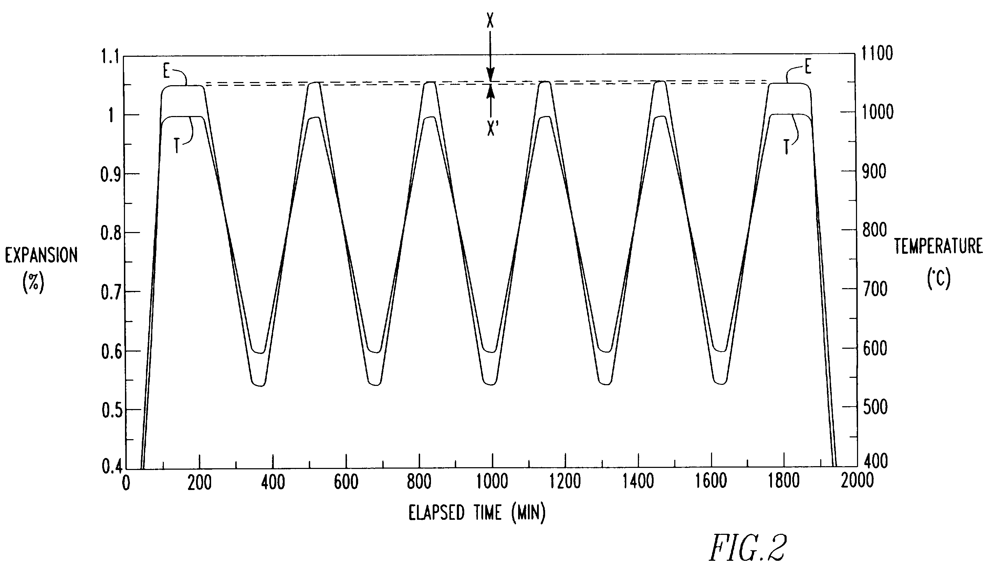

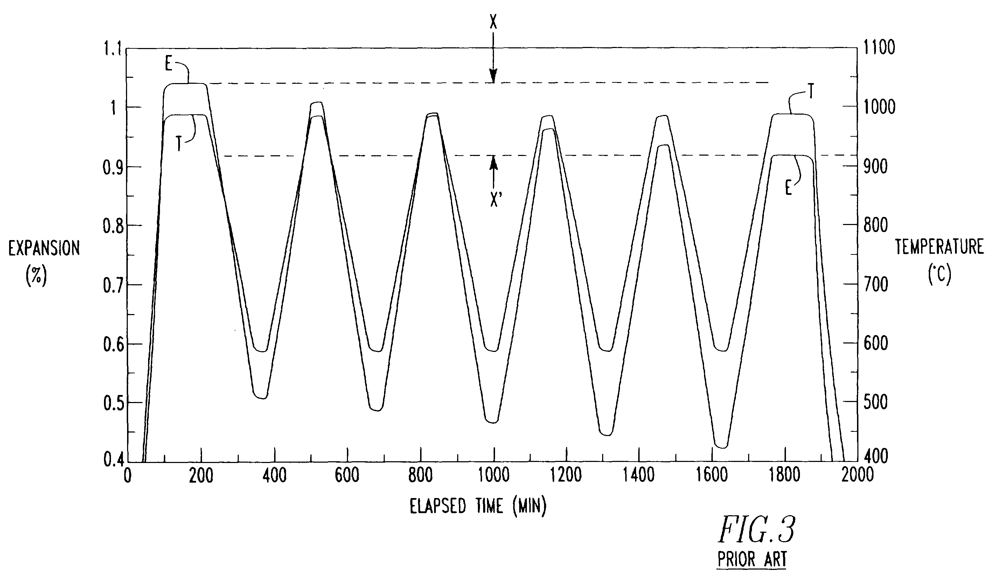

Figure 2 shows a plot of the thermal cycling behavior of a preferred air electrode composition which was made and had the formula $La_{0.7} Ca_{0.2} Ce_{0.105} Mn_{0.94} Cr_{0.04} Ni_{0.02} O_3$, for cycling between 1000 to 600°C. Figure 3 shows a comparison plot for a prior art air electrode material having the formula $La_{0.8} Ca_{0.2} Mn O_3$. It is seen that the preferred air electrode composition according to the invention, as shown in Figure 2, shows no measurable shrinkage under these thermal cycling conditions while the prior art air electrode, as shown in Figure 3, shows a shrinkage of about 0.03% per thermal cycle. Other compositions within the ranges claimed and set forth previously will also provide advantageous results. In Figures 2 and 3, the letter E shows the expansion curve and the letter T shows the temperature curve. The final shrinkage is determined as the difference between peaks on the expansion curve E at a temperature of 1000°C as shown as X-X'.

Moreover, an advantage of using Ce as a replacement for some of the La is to reduce a tendency for formation of lanthanum zirconate at the air electrode-electrolyte interface. It is also believed that the combination of Ca, Ce, Ni and Cr doping makes the material less sensitive to accelerated shrinkage during cooling of the generator, which might occur during processing steps, operational malfunctions or special operational procedures. It is further believed that the addition of Cr and Ni, and mixtures thereof, in small amounts helps to prevent oxygen loss which can be another source of undesired dimensional change at moderately low oxygen pressures sometimes encountered during processing procedures, such as interconnection or electrolyte deposition by electrochemical vapor deposition in the range of 1200°C to 1400°C. It should also be understood that the invention in its broader aspects is applicable to a variety of electrochemical devices including oxygen sensors, electrolysis cells, and high temperature, solid oxide electrolyte fuel cells, all of whose operation is well known in the art.

The invention having been disclosed in connection with the foregoing variations and examples, additional variations will now be apparent to persons skilled in the art. The invention is not intended to be limited to the variations specifically mentioned, and accordingly reference should be made to the appended claims rather than the foregoing discussion of preferred examples, to assess the scope of the invention in which exclusive rights are claimed.

## Claims

1.  A composition, characterized by having the general chemical formula:

$$La_{1-x-w} (M_L)_x (Ce)_{w+z} (M_{s1})_{1-y} (M_{s2})_y O_3$$

where $M_L$ is Ca, $M_{s1}$ is Mn, $M_{s2}$ is selected from the group consisting of Ni, Cr and mixtures thereof, x is about 0.2, w is 0.1 to 0.2, y is 0.03 to 0.2, and z is 0.0 to 0.005.

2.  The composition according to claim 1, characterized by having the chemical formula:

$$La_{0.7} Ca_{0.2} Ce_{0.1} Mn_{0.875} Cr_{0.125} O_3.$$

3.  The composition according to claim 1, characterized by having the chemical formula:

$$La_{0.7} Ca_{0.2} Ce_{0.1} Mn_{0.875} Ni_{0.125} O_3.$$

4.  The composition according to claim 1, characterized by having the chemical formula:

$$La_{0.7} Ca_{0.2} Ce_{0.105} Mn_{0.94} Cr_{0.04} Ni_{0.02} O_3.$$

5.  A porous electrode, characterized by having the general chemical formula:

$$La_{1-x-w} (M_L)_x (Ce)_{w+z} (M_{s1})_{1-y} (M_{s2})_y O_3$$

where $M_L$ is Ca, $M_{s1}$ is Mn, $M_{s2}$ is selected from the group consisting of Ni, Cr and mixtures thereof, x is about 0.2, w is 0.1 to 0.2, y is 0.03 to 0.2, and z is 0.0 to 0.005.

6.  The electrode of claim 7, characterized in that the electrode is annular.

7.  The electrode of claim 7, characterized in that the electrode is planar.

8.  An annular high temperature, solid oxide electrolyte electrochemical cell, characterized by having: a porous, annular, inner air electrode; a dense, solid oxide electrolyte substantially surrounding the outer periphery of the air electrode; and a porous, outer fuel electrode substantially surrounding the solid electrolyte, where the solid electrolyte and outer fuel electrode have a discontinuity containing an electrically conductive interconnection material disposed on the inner air electrode in the discontinuity of the electrolyte, wherein the air electrode has the general chemical formula:

$$La_{1-x-w} (M_L)_x (Ce)_{w+z} (M_{s1})_{1-y} (M_{s2})_y O_3$$

where $M_L$ is Ca, $M_{s1}$ is Mn, $M_{s2}$ is selected from the group consisting of Ni, Cr and mixtures thereof, x is about 0.2, w is 0.1 to 0.2, y is 0.03 to 0.2, and z is 0.0 to 0.005.

9.  The electrochemical cell of claim 8, wherein the air electrode is characterized by having a self-supporting structure.

10. The electrochemical cell of claim 8, wherein the interconnect is characterized by having a dense structure made of doped lanthanum chromite, the electrolyte is characterized by having a dense structure made of stabilized zirconia, and the fuel electrode is characterized by having a porous structure made of nickel-zirconia.

## Patentansprüche

1.  Zusammensetzung, gekennzeichnet dadurch, dass sie die allgemeine chemische Formel:

$$La_{1-x-w} (M_L)_x (Ce)_{w+x} (M_{s1})_{1-y} (M_{s2})_y O_3$$

hat, worin $M_L$ Ca ist, $M_{s1}$ Mn ist, $M_{s2}$ von der Gruppe ausgewählt ist, die aus Ni, Cr und Mischungen davon besteht, x ungefähr 0,2 ist, w 0,1 bis 0,2 ist, y 0,03 bis 0,2 ist, und z 0,0 bis 0,005 ist.

2. Zusammensetzung nach Anspruch 1, gekennzeichnet dadurch, dass sie die allgemeine chemische Formel:

$$La_{0,7} Ca_{0,2} Ce_{0,1} Mn_{0,875} Cr_{0,125} O_3$$

hat.

3. Zusammensetzung nach Anspruch 1, gekennzeichnet dadurch, dass sie die allgemeine chemische Formel:

$$La_{0,7} Ca_{0,2} Ce_{0,1} Mn_{0,875} Ni_{0,125} O_3$$

hat.

4. Zusammensetzung nach Anspruch 1, gekennzeichnet dadurch, dass sie die allgemeine chemische Formel:

$$La_{0,7} Ca_{0,2} Ce_{0,105} Mn_{0,94} Cr_{0,04} Ni_{0,02} O_3$$

hat.

5. Poröse Elektrode, gekennzeichnet dadurch, dass sie die allgemeine chemische Formel:

$$La_{1-x-w} (M_L)_x (Ce)_{w+x} (M_{s1})_{1-y} (M_{s2})_y O_3$$

hat, worin $M_L$ Ca ist, $M_{s1}$ Mn ist, $M_{s2}$ von der Gruppe ausgewählt ist, die aus Ni, Cr und Mischungen davon besteht, x ungefähr 0,2 ist, w 0,1 bis 0,2 ist, y 0,03 bis 0,2 ist, und z 0,0 bis 0,005 ist.

6. Elektrode nach Anspruch 5, dadurch gekennzeichnet, dass die Elektrode ringformig ist.

7. Elektrode nach Anspruch 5, dadurch gekennzeichnet, dass die Elektrode eben ist.

8. Ringförmige elektrochemische Zelle mit einem Hochtemperaturfestoxidelektrolyten, dadurch gekennzeichnet, dass sie folgendes hat:
eine poröse, ringförmige innere Luftelektrode; einen dichten Festoxidelektrolyten, der die äussere Peripherie der Luftelektrode im wesentlichen umgibt; und eine poröse, äussere Brennstoffelektrode, die im wesentlichen den Festelektrolyten umgibt, in der der Festelektrolyt und die äussere Brennstoffelektrode eine Diskontinuität haben, die ein elektrisch leitendes Verbindungsmaterial enthält, das auf der inneren Luftelektrode in der Diskontinuität des Elektrolyten angeordnet ist, worin die Luftelektrode die allgemeine chemische Formel:

$$La_{1-x-w} (M_L)_x (Ce)_{w+x} (M_{s1})_{1-y} (M_{s2})_y O_3$$

hat, worin $M_L$ Ca ist, $M_{s1}$ Mn ist, $M_{s2}$ von der Gruppe ausgewählt ist, die aus Ni, Cr und Mischungen davon besteht, x ungefähr 0,2 ist, w 0,1 bis 0,2 ist, y 0,03 bis 0,2 ist, und z 0,0 bis 0,005 ist.

9. Elektrochemische Zelle nach Anspruch 8, in der die Luftelektrode dadurch gekennzeichnet ist, dass sie eine selbsttragende Struktur hat.

10. Elektrochemische Zelle nach Anspruch 8, in der die Verbindung dadurch gekennzeichnet ist, dass sie eine dichte Struktur hat, die aus dotiertem Lanthanchromit hergestellt ist, der Elektrolyt dadurch gekennzeichnet ist, dass er eine dichte Struktur hat, die aus die aus stabilisiertem Zirconiumdioxid hergestellt ist, und die Brennstoffelektrode dadurch gekennzeichnet ist, dass sie eine poröse Struktur hat, die aus Nickel-Zirconiumdioxid hergestellt ist.

**Revendications**

1. Composition caractérisée comme ayant la formule chimique générale :

$$La_{1-x-w} (M_L)_x (Ce)_{w+z} (M_{s1})_{1-y} (M_{s2})_y O_3$$

dans laquelle $M_L$ représente Ca, $M_{s1}$ représente Mn, $M_{s2}$ est choisi dans le groupe comprenant Ni, Cr et des mélanges de ceux-ci, x vaut environ 0,2, w vaut de 0,1 à 0,2, y vaut de 0,03 à 0,2 et z vaut de 0,0 à 0,005.

2. Composition selon la revendication 1, caractérisée comme ayant la formule chimique :

$$La_{0,7} Ca_{0,2} Ce_{0,1} Mn_{0,875} Cr_{0,125} O_3.$$

3. Composition selon la revendication 1, caractérisée comme ayant la formule chimique :

$$La_{0,7} Ca_{0,2} Ce_{0,1} Mn_{0,875} Ni_{0,125} O_3.$$

4. Composition selon la revendication 1, caractérisée comme ayant la formule chimique :

$La_{0,7} Ca_{0,2} Ce_{0,105} Mn_{0,94} Cr_{0,04} Ni_{0,02} O_3$.

5. Electrode poreuse caractérisée comme ayant la formule chimique générale :

$$La_{1-x-w} (M_L)_x (Ce)_{w+z} (M_{s1})_{1-y} (M_{s2})_y O_3$$

dans laquelle $M_L$ représente Ca, $M_{s1}$ représente Mn, $M_{s2}$ est choisi dans le groupe comprenant Ni, Cr et des mélanges de ceux-ci, x vaut environ 0,2, w vaut de 0,1 à 0,2, y vaut de 0,03 à 0,2 et z vaut de 0,0 à 0,005.

6. Electrode selon la revendication 5, caractérisée en ce que ladite électrode est annulaire.

7. Electrode selon la revendication 5, caractérisée en ce que ladite électrode est plane.

8. Pile électrochimique à électrolyte d'oxyde solide, annulaire et fonctionnant à haute température, caractérisée comme comprenant une électrode intérieure à air, annulaire et poreuse, un électrolyte d'oxyde solide, dense, qui entoure sensiblement la périphérie extérieure de l'électrode à air, et une électrode extérieure de combustible, poreuse, qui entoure sensiblement l'électrolyte solide, dans laquelle l'électrolyte solide et l'électrode extérieure de combustible présentent une discontinuité contenant un matériau d'interconnexion électro-conducteur placé sur l'électrode intérieure à air dans la discontinuité de l'électrolyte, l'électrode à air ayant la formule chimique générale :

$$La_{1-x-w} (M_L)_x (Ce)_{w+z} (M_{s1})_{1-y} (M_{s2})_y O_3$$

dans laquelle $M_L$ représente Ca, $M_{s1}$ représente Mn, $M_{s2}$ est choisi dans le groupe comprenant Ni, Cr et des mélanges de ceux-ci, x vaut environ 0,2, w vaut de 0,1 à 0,2, y vaut de 0,03 à 0,2 et z vaut de 0,0 à 0,005.

9. Pile électrochimique selon la revendication 8, dans laquelle l'électrode à air est caractérisée comme ayant une structure autoporteuse.

10. Pile électrochimique selon la revendication 8, dans laquelle l'interconnexion est caractérisée comme ayant une structure dense faite de chromite de lanthane dopé, l'électrolyte est caractérisé comme ayant une structure dense faite de zircone stabilisée et l'électrode de combustible est caractérisée comme ayant une structure poreuse faite de nickel-zircone.

FIG.1

*FIG.2*

*FIG.3*
PRIOR ART

EP 0 639 866 B1